# EUROPÄISCHE PATENTSCHRIFT

(11) **EP 1 245 074 B1**
(45) Veröffentlichungstag und Bekanntmachung des Hinweises auf die Patenterteilung: **09.06.2010**
(21) Anmeldenummer: 01900011.6
(22) Anmeldetag: 05.01.2001
(51) Int. Cl.: H02M 7/217, H02M 1/12

(54) **NETZRÜCKWIRKUNGSARMES DREIPHASEN-STROMZWISCHENKREIS-PULSGLEICH-RICHTERSYSTEM MIT WEITEM STELLBEREICH DER AUSGANGSSPANNUNG**
THREE PHASE-ELECTRICAL INTERMEDIATE CIRCUIT HAVING REDUCED NETWORK FEEDBACK-IDENTICAL PULSE-DIRECTOR SYSTEM WITH A WIDE POSITIONING RANGE PERTAINING TO THE OUTPUT VOLTAGE
SYSTEME REDRESSEUR TRIPHASE A IMPULSIONS, A CIRCUIT INTERMEDIAIRE ET A FAIBLE REACTION SUR LE RESEAU, DOTE D'UNE LARGE PLAGE DE REGLAGE DE LA TENSION DE SORTIE

(30) Priorität: 05.01.2000 AT 92000
(43) Veröffentlichungstag der Anmeldung: 02.10.2002
(73) Patentinhaber: DET International Holding Limited, George Town, Grand Cayman (KY)
(72) Erfinder: KOLAR, Johann, W., 8044 Zürich (CH)
(74) Vertreter: Roshardt, Werner Alfred
(86) Internationale Anmeldenummer: PCT/CH2001/000005
(87) Internationale Veröffentlichungsnummer: WO 2001/050583

(56) Entgegenhaltungen:
- GB-A- 2 294 165
- KOLAR J W ET AL: "STATUS OF THE TECHNIQUES OF THREE-PHASE RECTIFIER SYSTEMS WITH LOW EFFECTS ON THE MAINS" COPENHAGEN, JUNE 6 - 9, 1999,NEW YORK, NY: IEEE,US, 6. Juni 1999 (1999-06-06), Seiten 14-1-01-16, XP000868416 ISBN: 0-7803-5625-X

## Beschreibung

Die Erfindung betrifft eine Vorrichtung zur Umformung von Drehstrom- in Gleichstromenergie die nach Filterung schaltfrequenter Spektralanteile auch bei Ausfall einer Phase einen sinusförmigen Verlauf des Eingangsstromes und die Möglichkeit der Erzeugung einer über oder unter dem Spitzenwert der verketteten Netzspannung liegenden Ausgangsspannung aufweist, wie sie im Oberbegriff des Patentanspruches 1 beschrieben ist, sowie Verfahren zur Steuerung dieser Vorrichtung.

Nach dem derzeitigen Stand der Technik weisen netzrückwirkungsarme Dreiphasen-Pulsgleichrichter ohne Potentialtrennung i.a. Hochsetzstellercharakteristik auf, d.h. die einstellbare Ausgangsspannung ist durch die Amplitude der verketteten Netzspannung nach unten begrenzt. Ein direkter Einsatz derartiger Systeme, z.B. zur Speisung eines Pulswechselrichtersystems mit variabler Zwischenkreisspannung ist damit i.a. nicht möglich. Weiters ist für diese Systeme im Zuge des Hochlaufs eine Vorladung des Ausgangskondensators vorzunehmen und bei Ausgangskurzschluß keine Möglichkeit einer Strombegrenzung gegeben.

Bekannte tiefsetzstellerbasierte Schaltungen weisen bei Einschränkung auf unidirektionale Energieumformung zwar geringen Realisierungsaufwand, d.h. nur einen abschaltbaren Leistungshalbleiter je Phase auf, allerdings ist die Ausgangsspannung durch die verkettete Netzspannung nach oben begrenzt und bei Ausfall einer Phase keine Möglichkeit einer Weiterführung des Betriebes mit sinusförmigem Eingangsstrom bzw. ohmschem Grundschwingungs-Netzverhalten gegeben.

In der AT 404.415 wird eine unidirektionale Pulsgleichrichterschaltung mit weitem Eingangsspannungsbereich bzw. bei gegebener Eingangsspannung weitem Ausgangsspannungsbereich beschrieben, deren Realisierung ebenfalls nur ein abschaltbares Ventil je Phase erfordert und die auch bei Phasenausfall einen netzrückwirkungsarmen Betrieb ermöglicht. Allerdings ist dieses System durch eine hohe Sperrspannungsbeanspruchung der Ventile gekennzeichnet und weist zwei Koppelkondensatoren mit hoher Strombeanspruchung und zwei magnetischen Energiespeicher je Phase auf, womit der für industrieelektronische Systeme allgemein bestehenden Forderung nach geringer Komplexität des Leistungsteiles bzw. der Forderung nach minimaler Anzahl passiver Komponenten nicht Rechnung getragen werden kann.

Aufgabe der Erfindung ist es daher ein Drehstrom-Pulsgleichrichtersystem zu schaffen, das im zwei- und dreiphasigen Betrieb einen sinusförmigen Verlauf des Netzstromes und einen nicht durch die verkettete Netzspannung beschränkten Ausgangsspannungbereich aufweist und keine Vorrichtung zur Vorladung des Ausgangskondensators erfordert.

Dies wird erfindungsgemäß durch die kennzeichnenden Merkmale des Patentanspruches 1 erreicht. Weitere vorteilhafte Ausgestaltungen der Erfindung sind den Unteransprüchen zu entnehemen.

Das erfindungsgemäße Gleichrichtersystem kann durch erfindungsgemäße Erweiterung der Grundstruktur eines dem Stand der Technik entsprechenden unidirektionalen Dreiphasen-Gleichrichtersystems mit eingeprägtem Ausgangsstrom bzw. Stromzwischenkreis gebildet gedacht werden. Der Leistungsteil eines konventionellen unidirektionalen Pulsgleichrichtersystems mit Stromausgang wird im einfachsten Fall durch eine spannungseinprägende eingangsseitige Stern- oder Dreieckschaltung von Filterkondensatoren, eine, durch Anordnung eines abschaltbaren Leistungshalbleiters je Phase in ihrem Leitzustand steuerbare Drehstrombrückenschaltung und die dieser Brücke nachgeschaltete stromeinprägende Ausgangsinduktivität gebildet.

Jeder Brückenzweig der steuerbaren Drehstrombrücke weist idente Struktur auf und wird durch eine, kathodenseitig an der Ausgangsinduktivität liegende positive Ausgangsdiode an deren Anode der Emitter des abschaltbaren elektronischen Steuerschalters (z.B. eines Leistungstransistors) und die Anode einer, katodenseitig mit der Phaseneingangsklemme verbundene positive Eingangsdiode geführt wird und eine, kathodenseitig am Kollektor des Steuerschalters und anodensetig mit der negativen Ausgangsstromschiene verbundene negative Ausgangsdiode und eine von der Eingangsphasenklemme abzweigende, ebenfalls kathodenseitig an den Kollektor des Leistungstransistors geführte negative Eingangsdiode gebildet. Die zweite Klemme der Ausgangsinduktivität ist mit der positiven Ausgangsstromschiene verbunden, weiters wird i.a. zwischen positiver und negativer Ausgangsstromschiene ein die Ausgangsspannung definierender Ausgangskondensator angeordnet. Durch Sperren eines Steuerschalters kann ein Stromfluß über den betreffenden Brückenzweig unterbunden werden, im durchgeschalteten Zustand des Steuerschalters weist der Brückenzweig idente Eigenschaften wie der Brückenzweig einer konventionellen Diodenbrücke auf. Die hiemit gegebene Steuerbarkeit des Leitzustandes kann zur Verringerung der Ausgangsspannung des Systems gegenüber konventioneller Diodengleichrichtung und zur Verringerung der Netzrückwirkungen genutzt werden. Wie eine nähere Analyse zeigt, wird bei entsprechender phasensymmetrischer Steuerung der Ausgangsstrom derart auf die Eingangsphasen aufgeteilt, daß nach Filterung schaltfrequenter Harmonischer durch das, aus den eingangsseitigen Kondensatoren und der inneren Netzinduktivität gebildete Tiefpaßfilter ein sinusförmiger, in Phase mit der Netzspannung liegende Verlauf des Netzstroms resultiert. Allerdings kann die Sinusform des Stromverlaufs bei Ausfall einer Phase nur theoretisch, d.h. mit wirtschaftlich nicht vertretbaren sehr hohen Induktivitätswerten der Ausgangsinduktivität aufrechterhalten werden. Weiters wird in diesem Fall der Ausgangsspannungsbereich durch den Gleichrichtmittelwert der verbleibenden verketteten Netzspannung nach oben eingeschränkt, d.h. die für dreiphasigen Betrieb eingestellte Ausgangsspannung kann u.U. nicht aufrecht erhalten werden.
Grundgedanke der Erfindung ist nun, diese Nachteile durch aufwandsarme Integration einer Hochsetzstellerstufe in die Konverterstruktur zu vermeiden. Hiefür wird zwischen der zweiten Klemme der Ausgangsinduktivität und der positiven Ausgangskondensatorklemme eine, in Richtung des Ausgangs orientierte Hochsetzstellerdiode und von der Anode dieser Diode abzweigend ein Hochsetzstellertransistor mit dem Emitter gegen die negative Ausgangsspannungsschiene geschaltet. Die Ausgangsinduktivität des konventionellen Konverters übernimmt die Funktion der Hochsetzstellerinduktivität. Ist am Ausgang des Systems eine unterhalb des Mittelwertes der maximalen Ausgangsspannung der steuerbaren Diodenbrücke liegende Spannung zu bilden, verbleibt der Hochsetzstellertransistor gesperrt und die Funktion des erfindungsgemäßen Systems entspricht dann der des konventionellen Pulsgleichrichters. Ein über dem konventionell maximal, erreichbaren Ausgangsspannungswert liegender Spannungswert wird durch Sinus-Vollaussteuerung der Drehstrombrücke und ein entsprechendes Tastverhältnis des Hochsetzstellertransistors erreicht. Die Grundfunktion des Hochsetzstellers entspricht hiebei vollständig jenem eines zwischen Diodenbrückenausgang und Ausgangskondensator angeordneten Gleichspannungs-Gleichspannungs-Hochsetzstellers und muß daher hier nicht näher ausgeführt werden.

Für dreiphasigen Betrieb wird der Strom in der Ausgangsinduktivität vorteilhaft auf einem konstanten Wert gehalten. Bei Ausfall einer Phase werden die Steuertransistoren der verbleibenden Phasen in jenen Intervallen durchgeschaltet, in denen die verbleibende verkettete Netzspannung unter der Ausgangspannung liegt (Umgebung der Nulldurchgänge). Der Eingangsstrom wird in diesen Intervallen durch den Hochsetzsteller proportional der verketteten Eingangsspannung geführt. In den anschließenden Abschnitten einer Netzperiode in denen die Eingangsspannung die Ausgangsspannung des Systems übersteigt (Umgebung der Spannungsmaxima), wird der Hochsetzstellertransistor geperrt und der Strom in der Ausgangsinduktivität durch entsprechende Ansteuerung der Steuertransistoren so geführt, daß eine kontinuierliche Fortsetzung des Netzstromes bzw. des mittels Filterung von schaltfrequenten Harmonischen befreiten Eingangsstromes der Drehstrombrücke erreicht wird. (Wie eine nähere Analyse zeigt folgt der Strom in der Ausgangsinduktivität dann einem dem Quadrat des Eingangsstromes proportionalen Verlauf).

Durch die erfindungsgemäße Schaltungsmodifikation können so bei gegenüber eine konventionellen Schaltungsrealisierung relativ geringem Zusatzaufwand deren wesentliche Nachteile, d.h., eingeschränkter Ausgangsspannungsbereich und Verlust der Sinusform des Netzstromes bei Phasenausfall vermieden werden. Weiters ist anzumerken, daß trotz der Hochsetzstellercharakterisitk ein direkter Hochlauf des Systems möglich ist, d.h. die Vorladung des Ausgangskondensators durch kontinuierliche, bei Ausgangsspannung Null beginnende Erhöhung der Aussteuerung der Drehstrombrücke bei gesperrtem Hochsetzstellertransistor möglich ist.
Eine weitere vorteilhafte Ausgestaltung der Erfindung beschreibt der Patentanspruch 2. Wie vorgehend erwähnt, wird der Leitzustand der eingangsseitigen Drehstrombrücke durch drei Leistungstransistoren gesteuert, wobei auch Intervalle auftreten in denen am Ausgang der Diodenbrücke keine Spannung gebildet wird. Diese Zeitabschnitte werden im folgenden als Freilaufintervalle bezeichnet. Der durch die Ausgangsinduktivität eingeprägte Stromfluß wird dann über die positive Ausgangsdiode, den Steuertransistor und die negative Ausgangsdiode jedenfalls eines Brückenzweiges geführt. Insbesondere bei kleiner Ausgangsspannung, d.h. bei hoher relativer Einschaltzeit der Freilaufzustände treten somit zufolge der drei im Strompfad liegenden Ventilspannungsabfälle relativ hohe Leitverluste auf. Dies kann erfindungsgemäß durch Anordnen einer expliziten Freilaufdiode zwischen negativer Ausgangsstromschiene und eingangsseitigem Ende der Ausgangsinduktivität vermieden werden, die innerhalb der Freilaufintervalle den gesamten Strom übernimmt und aufgrund ihres relativ geringen Durchlaßspannungsabfalls bei gleichem Strom wesentlich geringere Durchlaßverluste als die Serienschaltung von 3 Ventilen aufweist. Ein weiterer Vorteil dieser erfindungsgemäßen Schaltungserweiterung besteht darin, daß nun unabhängig vom konkreten Schaltzustand der Steuertransistoren für den am Ausgang der Drehstrombrücke eingeprägten Ausgangsstrom stets ein geschlossener Pfad zur Verfügung steht und somit das Auftreten von Überspannungen durch nicht überlappendes Schalten der Steuertransistoren (bedingt durch Verzögerungszeiten der Signalelektronik oder der Ansteuerstufen) sicher vermieden wird.
Eine kontinuierliche Führung des Ausgangsstromes über die Diodenbrücke kann bei Einsatz eines erfindungsgemäßen Steuerverfahrens nach **Patentanspruch 3** auch ohne explizite Freilaufdiode erreicht werden. Hiebei verbleibt in symmetrisch um die Maxima einer Eingangsphasenspannungen liegenden 60°el. breiten Intervallen der zugehörige Steuertransistor durchgeschaltet und der sinusförmige Netzstromverlauf und die Regelung der Ausgangsspannung werden durch Taktung der beiden anderen Phasen erreicht. Die Funktion einer derartigen Steuerung wird unter Berücksichtigung der Tatsache anschaulich klar, daß innerhalb dieser Intervalle die gegenüber der nicht schaltenden Phase auftretenden verketteten Spannungen und die im Mittel über eine Pulsperiode zu bildenden netzspannungsproportionalen sinusförmigen Eingangsströme keinen Vorzeichenwechsel aufweisen und das System somit als Gfeichspannungs-Gleichspannungs-Tiefsetzsteller betrachtet werden kann, der ausgehend von einem konstanten Ausgangstrom eine sinusförmige Modulation des Eingangsstromes bzw. ausgehend von einer sinusförmig variierenden unipolaren Eingangsspannung die Erzeugung einer konstanten Ausgangsspannung erlaubt. Die Steuerung weist somit mit Ausnahme des erfindungsgemäßen Beibehaltens des Schaltzustandes einer Phase keine Besonderheiten auf und soll hier nicht weiter diskutiert werden.
Eine Minimierung der schaltfrequenten Schwankung (des Rippels) des Ausgangsstromes der Diodenbrücke kann durch erfindungsgemäße Koordination der Steuerung des Hochsetzstellertransistors und der Steuertransistoren nach Patentanspruch 4 erreicht werden. Der Stromrippel wird durch über der Induktivität auftretenden positiven und negativen Spannungsdifferenzen bzw. Spannungszeitflächen bestimmt. Weisen beide Systeme gleiche Taktfrequenz auf und erfolgt die Steuerung derart, daß die Durchschaltintervalle des Hochsetzstellers symmetrisch um die Freilaufintervalle der Diodenbrücke zu liegen kommen, tritt für die Überdeckung dieser Schaltzustände an der Induktivität keine Spannung und damit keine Änderung des Stromes in der Induktivität auf und womit eine relativ geringe Amplitude des schaltfrequenten Rippels resultiert. Weiters wird damit unter Berücksichtigung der für Leiten der Hochsetzstellerdiode und eine Brückenausgangsspannung bildende Schaltzustände der Drehstrombrücke auftretenden Spannungsdifferenzen die Möglichkeit der Berechnung einer, z.B. auf minimalen Effektivwert des Stromrippels führenden optimalen Phasenversetzung der gleichfrequenten, d.h. jedenfalls eine Überdeckung der Freilaufzustände aufweisenden Steuerung beider Teilsysteme deutlich, die aufgrund ihrer Bindung an ein definiertes Spannungsübersetzungsverhältnis und des relativ hohen Aufwandes einer praktischen Umsetzung von geringer Bedeutung ist und daher hier nicht näher beschrieben werden soll.
Die Erfindung soll im weiteren anhand einer Zeichnung näher erläutert werden.

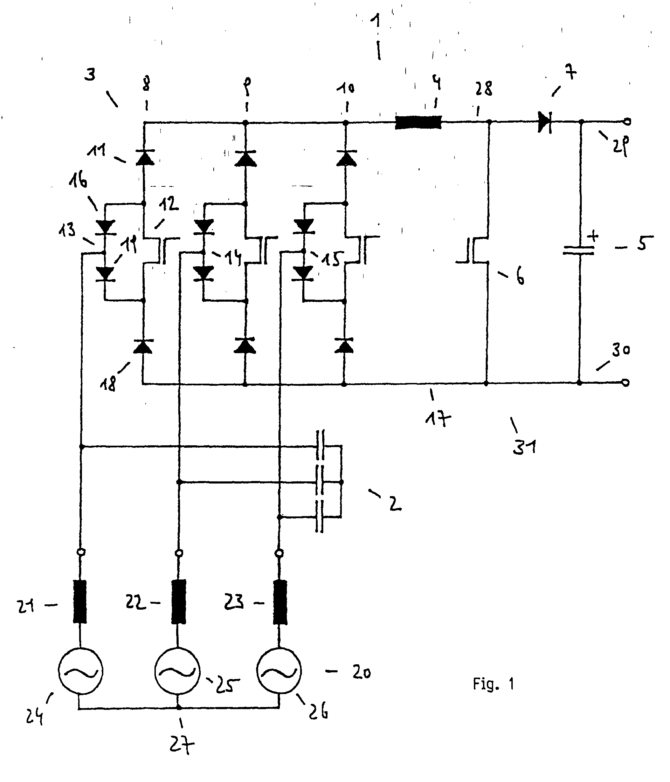

**Fig.1** zeigt die erfindungsgemäße erweiterte Grundstruktur des Leistungsteiles (vereinfachte, schematische Darstellung) eines konventionellen unidirektionalen Drehstrom-Pulsgleichrichtersystems mit eingeprägtem Ausgangsstrom bzw. Stromzwischenkreis.
In **Fig.1** ist ein Drehstrom-Pulsgleichrichtersystem 1 mit weitem Stellbereich der Ausgangsspannung dargestellt, das durch erfindungsgemäße Erweiterung eines dem Stand der Technik entsprechenden Dreiphasenpulsgleichrichtersystems, gebildet durch eine eingangsseitige Sternschaltung 2 von Filterkondensatoren, eine durch abschaltbare Leistungshalbleiter steuerbare Drehstromdiodenbrücke 3, eine deren Ausgangsstrom einprägende Induktivität 4 und einen, die gebildete Ausgangsspannung stützenden Kondensator 5, durch einen Hochsetzstellertransistor 6 und eine Hochsetzstellerdiode 7 gebildet gedacht werden kann.
Die Brückenzweige 8,9,10 der steuerbaren Diodenbrücke 3 weisen idente Struktur auf und werden durch eine, kathodenseitig an der Induktivität 4 liegende positive Ausgangsdiode 11, an deren Anode der Emitter des abschaltbaren, den Leitzustand des Brückenzweiges bestimmenden, im weiteren daher kurz alls Steuerschalter bezeichneten abschaltbaren elektronischen Schalter 12 (z.B. realisiert durch einen Leistungstransistor) und die Anode einer, katodenseitig mit der Phaseneingangsklemme 13, 14 oder 15 verbundenen positive Eingangsdiode 16 geführt wird und eine, kathodenseitig am Kollektor des elektronischen Schalters 12 und anodenseitig mit der negativen Ausgangsstromschiene 17 verbundene negative Ausgangsdiode 18 und eine von der Phaseneingangsklemme 13, 14 oder 15 abzweigende, ebenfalls kathodenseitig an den Kollektor des Steuerschalters 12 geführte negative Eingangsdiode 19 gebildet. Das System wird an einem Dreiphasennetz betrieben, was durch eine Sternschaltung 20 von, über, die innere Netzinduktivität darstellende Ersatzinduktivitäten 21,22,23 an die Eingangsklemmen 13,14,15 gelegte Ersatzspannungsquellen 24,25,26 mit Sternpunkt 27 veranschaulicht wird.
Durch Sperren eines Steuerschalters 12 kann ein Stromfluß über den betreffenden Brückenzweig 8, 9 oder 10 unterbunden werden, im durchgeschalteten Zustand des Steuerschalter 12 weist der Brückenzweig gleiche Eigenschaften wie der Brückenzweig einer konventionellen Diodenbrücke auf. Beispielsweise wird dann ein positiver, d.h. physikalisch in die Eingangsklemme 13 fließender Strom über die negative Eingangsdiode 19, den Steuerschalter 12 und die positive Ausgangsdiode 11 und ein negativer Eingangsstrom über die negative Ausgangsdiode 18, den Steuerschalter 12 und die positive Eingangsdiode 16 geführt. Die hiemit gegebene Steuerbarkeit des Leitzustandes der Drehstrombrücke kann zur Verringerung der Ausgangsspannung des Systems gegenüber einer konventionellen Diodenbrücke und zur Verringerung der Netzrückwirkungen genutzt werden. Der durch die Ausgangsinduktivität 4 eingeprägte Strom wird hiebei entsprechend dem Stand der Technik durch entsprechende phasensymmetrische Ansteuerung der Steuerschalter 12 derart auf die Phaseneingänge aufgeteilt, daß nach Filterung schaltfrequenter Harmonischer durch die direkt von den Eingangsklemmen 13,14,15 abzweigende Sternschaltung 2 von Filterkondensatoren mit Sternpunkt 20 in Verbindung mit den inneren Induktivitäten 21,22,23 der Netzphasen ein sinusförmiger, in Phase mit den zugeordneten Netzphasenspannungen 24,25 oder 26 liegender Verlauf der Netzphasenströme resultiert.
Grundgedanke der Erfindung ist nun, diese auf Tiefsetzstellerbetrieb beschränkte, d.h. stets eine unter dem Gleichrichtmittelwert der Ausgangsspannung der steuerbaren Drehstrombrücke 3 liegende, durch den Ausgangskondensator 5 gestützte Ausgangsspannung aufweisende Konverterstruktur mit minimalem Zusatzaufwand auf die Möglichkeit eines Hochsetzstellerbetriebs zu erweitern. Hiefür wird zwischen der, der Diodenbrücke 3 abgewandeten zweiten Klemme 28 der Induktivität 4 und der positiven Ausgangskondensatorklemme 29 eine, in Richtung des Ausgangs orientierte Hochsetzstellerdiode 7 und von der Anode dieser Diode 7 abzweigend, ein Hochsetzstellertransistor 6 emitterseitig gegen die, an die negative Ausgangskondensatolklemme 30 geführte negative Ausgangsspannungsschiene 17 geschaltet. Die Ausgangsinduktivität 4 des konventionellen Konverters übernimmt dabei die Funktion der Hochsetzstellerinduktivität. Ist eine unterhalb des Mittelwertes der maximalen Ausgangsspannung der steuerbaren Drehstrombrücke 3 liegende Ausgangsspannung des Systems 1 zu bilden, verbleibt der Hochsetzstellertransistor 6 gesperrt und die Funktion des erfindungsgemäßen Systems 1 entspricht der eines konventionellen Pulsgleichrichters. Ein über dem konventionell maximal erreichbaren Ausgangsspannungswert liegender Wert der Spannung an der Ausgangskapazität 5 wird durch Vollaussteuerung der Drehstrombrücke und ein entsprechendes Tastverhältnis des Hochsetzstellertransistors 6 erreicht. Gemäß der Grundfunktion des nun zwischen Diodenbrückenausgang und Ausgangskondensator angeordneten Gleichspannungs-Gleichspannungs-Hochsetzstellers 31 wird dann durch Durchschalten des Hochsetzstellertransistors 6 der Strom in der Induktivität 4 geringfügig erhöht und diese einer Zunahme der magnetischen Energie entsprechende Stromerhöhung über Entmagnetisierung der Induktivität 4 gegen die Differenz der Spannung des Ausgangskondensators 5 und der Diodenbrücke 3 wieder abgebaut. Bei hoher relativer Einschaltdauer des Hochsetzstellertransistors 6 wird so stationär ein wesentlich über der Ausgangsspannung der Diodenbrücke 3 liegender Wert der Ausgangsspannung erreicht.

Für dreiphasigen Betrieb wird der Strom in der Ausgangsinduktivität 4 vorteilhaft auf einem konstanten Wert gehalten. Bei Ausfall einer Phase des speisenden Netzes werden die Steuertransistoren 12 der verbleibenden Phasen in jenen Zeitintervallen bleibend durchgeschaltet, in denen die verbleibende verkettete Netzspannung unter der Ausgangspannung liegt. Der Eingangsstrom wird in diesen Intervallen durch den Hochsetzsteller 31 über entsprechende Steuerung der relativen Einschaltzeit des Hochsetrstellertransistors 6 proportional zu der am Ausgang der Brückenschaltung 3 auftretenden gleichgerichteten verketteten Eingangsspannung geführt. In den anschließenden Abschnitten einer Netzperiode in denen die Eingangsspannung die Ausgangsspannung des Systems 1 übersteigt, wird der Hochsetzstellertransistor 6 geperrt und der Strom in der Induktivität 4 durch entsprechende Ansteuerung der Steuerschalter 12 der noch aktiven Phasen so geführt, daß eine kontinuierliche Fortsetzung des Netzstromes, d.h. des durch die Filterkondensatoren 2 und die innere Netzimpedanz gebildete Tiefpaßfilter von schaltfrequenten Harmonischen befreiten Eingangsstromes der Diodenbrücke 3 erreicht und somit auch bei Phasenausfall die bei dreiphsigem Betrieb eingestellte Ausgangsspannung und ohmsches Grundschwingungs-Netzverhalten des Systems aufrecht erhalten werden.

## Patentansprüche

1. Vorrichtung (1) zur Umformung eines, dreiphasigen Spannungssystems (20) in eine durch einen Ausgangskondensator (5) gestützte Gleichspannung, die eine von den Eingangsklemmen (13),(14),(15) abzweigende Sternschaltung (2) von Filterkondensatoren, eine steuerbare Drehstrombrücke (3) und am positiven Ausgang der Brückenschaltung (3) eine stromeinprägende Induktivität (4) aufweist, wobei die Phasenzweige (8),(9),(10) der Drehstrombrücke, (3) idente Struktur aufweisen und durch eine, kathodenseitig an der Induktivität (4) liegende positive Ausgangsdiode (11), an deren Anode der Emitter des abschaltbaren, den Leitzustand des Phasenzweiges bestimmenden elektronischen Steuerschalters (12) und die Anode einer, kathodenseitig mit der Phaseneingangsklemme (13),(14) oder (15) verbundenen positiven Eingangsdiode (16) geführt wird und eine, kathodenseitig am Kollektor des elektronischen Steuerschalters (12) und anodenseitig mit der negativen Ausgangsstromschiene (17) verbundene negative Ausgangsdiode 18 und eine von der Phaseneingangsklemme (13), (14) oder (15) abzweigende, ebenfalls kathodenseitig an den Kollektor des Steuerschalters (12) geführte negative Eingangsdiode (19) gebildet wird und der negative Pol (30) des Ausgangskondensator mit der negativen Ausgangsspannungsschiene (17) verbunden ist **dadurch gekennzeichnet, daß** zwischen der, der Drehstrombrücke (3) abgewandten zweiten Klemme (28) der Induktivität (4) und der positiven Ausgangskondensatorklemme (29) eine, in Richtung des Ausgangs orientierte Hochsetzstellerdiode (7) und von der Anode dieser Diode (7) abzweigend ein Hochsetzstellertransistor (6) gegen die, an die negative Ausgangskondensatorklemme (30) geführte negative Ausgangsspannungsschiene (17) geschaltet wird, wobei für Bildung einer unterhalb des Mittelwertes der maximalen Ausgangsspannung der Brückenschaltung (3) liegende Ausgangsspannung des Systems (1) der Hochsetzstellertransistor (6) im Sperrzustand verbleibt und die Bildung einer über dem hiebei maximal erreichbaren Ausgangsspannungswert liegenden Spannung bei Vollaussteuerung der Drehstombrücke (3) über ein entsprechendes Tastverhältnis des Hochsetzstellertransistors (6) erfolgt.

2. Vorrichtung nach Anspruch 1 **dadurch gekennzeichnet, daß** abzweigend von der negativen Ausgangsspannungsschiene (17) eine Freilaufdiode in Flußrichtung gegen die Verbindung der Kathoden der positiven Ausgangsdioden (11) der Drehstrombrücke (3) geschaltet wird und diese Diode innerhalb, der Freilaufintervalle, innerhalb der keine der zwischen den Eingangsklemmen (13),(14),(15) anliegenden verketteten Eingangsspannungen an den Ausgang der Drehstrombrücke (3) durchgeschaltet wird, den gesamten, durch die Induktivität (4) eingeprägten Strom übernimmt.

3. Verfahren zur Steuerung der Vorrichtung nach Anspruch 1 oder 2 **dadurch gekennzeichnet, daß** in symmetrisch um die Maxima einer Eingangsphasenspannungen liegenden, 60°el. breiten Intervallen der zugeordnete Steuertransistor durchgeschaltet verbleibt und der sinusförmige Netzstromverlauf und die Regelung der Ausgangsspannung durch Taktung der beiden anderen Phasen erreicht wird und so gegenüber eine gleichzeitigen Taktung aller Phasen die Schaltverlustleistung reduziert und die Steuerung des Systems vereinfacht wird.

4. Verfahren zur Steuerung der Vorrichtung nach Anspruch 1 oder 2 **dadurch gekennzeichnet, daß** die Steuerschalter (12) der Drehstrombrücke (3) und der Hochsetzstellertransistor (6) mit gleicher Taktfrequenz betrieben werden und die Umschaltung dieser beiden Konverterteile derart synchronisiert wird, daß die Durchschaltintervalle des Hochsetzstellers symmetrisch um die Freilaufintervalle der Drehstrombrücke (3) zu liegen kommen, wobei für die Überdeckung beider Schaltzustände an der Induktivität (4) keine Spannung und damit keine Stromänderung auftritt, womit die schaltfrequente Schwankung des Ausgangsstromes der Drehstrombrücke (3) minimiert wird.

## Claims

1. A device (1) for converting a three-phase voltage system (20) into a direct current voltage supported by an output capacitor (5), the device comprising a star-connection (2), branching off the input terminals (13), (14), (15), of filter capacitors, a controllable three-phase bridge (3) and, at the positive output of the bridge circuit (3), a current-shaping inductance (4), wherein the phase arms (8), (9), (10) of the three-phase bridge (3) are of identical structure, and each phase arm is formed by a positive output diode (11) connected on the cathode side to the inductance (4) and to the anode of which output diode the emitter of the disconnectable electronic control switch (12) determining the conducting state of the phase arm and the anode of a positive input diode (16) connected on the cathode side to the phase input terminal (13), (14) or (15) is routed, and by a negative output diode (18) connected on the cathode side to the collector of the electronic control switch (12) and on the anode side to the negative output power rail (17), and by a negative input diode (19) branching off the phase input terminal (13), (14) or (15) and likewise connected on the cathode side to the collector of the control switch (12), and the negative pole (30) of the output capacitor is connected to the negative output voltage rail (17), **characterised in that** a step-up converter diode (7) oriented in the direction of the output is connected between the second terminal (28), remote from the three-phase bridge (3), of the inductance (4) and the positive output capacitor terminal (29), and branching off from the anode of this diode (7) a step-up converter transistor (6) is connected to the negative output voltage rail (17) routed to the negative output capacitor terminal (30), wherein, to form an output voltage of the system (1) lying below the mean value of the maximum output voltage of the bridge circuit (3), the step-up converter transistor (6) remains in the off state, and a voltage lying above the maximum output voltage value achievable in this case is formed, with the three-phase bridge (3) being fully conductive, via a corresponding duty ratio of the step-up converter transistor (6).

2. A device according to claim 1, **characterised in that** branching off from the negative output voltage rail (17) a free-wheeling diode is connected in the flow direction to the connection of the cathodes of the positive output diodes (11) of the three-phase bridge (3) and within the free-wheeling intervals, within which none of the phase-to-phase input voltages present between the input terminals (13), (14), (15) is switched through to the output of the three-phase bridge (3), this diode takes over the entire current shaped by the inductance (4).

3. A method for control of the device according to claim 1 or 2, **characterised in that** the associated control transistor remains conductive in 60° electrical width intervals lying symmetrically around the maxima of an input phase voltage and the sinusoidal mains current flow and the regulation of the output voltage is achieved by pulsing of the two other phases and thus the switching power loss is reduced and the control of the system is simplified compared with a simultaneous pulsing of all the phases.

4. A method for the control of the device according to claim 1 or 2, **characterised in that** the control switches (12) of the three-phase bridge (3) and the step-up converter transistor (6) are operated at the same clock frequency and the switching of these two converter components is synchronised in such a way that the intervals in which the step-up converter is switched on are located symmetrically about the free-wheeling intervals of the three-phase bridge (3), wherein to cover both switching states no voltage and hence no current change occurs at the inductance (4), thus minimizing the switching-frequency fluctuation of the output current of the three-phase bridge (3).

## Revendications

1. Dispositif (1) de conversion d'un système de tension triphasée (20) en une tension continue soutenue par un condensateur de sortie (5), et qui présente
un circuit en étoile (2) constitué de condensateurs de filtrage et raccordé aux bornes d'entrée (13), (14), (15),
un pont asservi (3) de courants tournants et
une inductance (4) qui applique un courant à l'entrée positive du circuit de pont (3),
les branches de courant (8), (9), (10) du pont (3) de courants tournants présentant toutes une structure identique et étant formées par
une diode positive de sortie (11) dont la cathode est raccordée à l'inductance (4) et dont l'anode est raccordée à l'émetteur du commutateur électronique asservi (12) apte à être débranché et définissant l'état de conductivité de la branche de phase, et à l'anode d'une diode positive d'entrée (16) dont la cathode est reliée à la borne d'entrée de phase (13), (14) ou (15),
par une diode négative de sortie (18) dont la cathode est reliée au collecteur du commutateur électronique de commande (12) et dont l'anode est reliée au rail négatif (17) de courant de sortie et
par une diode négative d'entrée (19) raccordée à la borne d'entrée de phase (13), (14) ou (15), et dont la cathode est également raccordée au collecteur du commutateur de commande (12),
le pôle négatif (30) du condensateur de sortie étant relié au rail négatif (17) de tension de sortie, **caractérisé en ce que**
entre la deuxième borne (28) de l'inductance (4) non tournée vers le pont (3) de courants tournants et la borne positive (29) du condensateur de sortie, une diode (7) de relèvement de tension et un transistor (6) de relèvement de tension raccordé à l'anode de cette diode (7) sont raccordés au rail négatif (17) de tension de sortie raccordé à la borne négative (30) du condensateur de sortie,
**en ce que** pour former une tension de sortie du système (1) inférieure à la valeur moyenne de la tension maximale de sortie du circuit de pont (3), le transistor de relèvement de tension (6) reste à l'état bloqué et
**en ce que** la formation d'une tension située au-delà de la valeur maximale que peut atteindre la tension de sortie lorsque le pont (3) de courants tournants est à pleine charge s'effectue grâce à un cadençage approprié du transistor (6) de relèvement de tension.

2. Dispositif selon la revendication 1, **caractérisé en ce qu'**une diode de marche à vide raccordée au rail négatif (17) de tension de sortie est raccordée dans la direction d'écoulement à la liaison de la cathode des diodes positives de sortie (11) du pont (3) de courants tournants et à l'intérieur de l'intervalle de marche à vide au cours duquel aucune des tensions d'entrée en chaîne appliquée entre les bornes d'entrée (13), (14), (15) n'est raccordée à la sortie du pont (3) de courants tournants, cette diode reprenant la totalité du courant injecté par l'inductance (4).

3. Procédé de commande du dispositif selon les revendications 1 ou 2, **caractérisé en ce que** dans des intervalles d'une largeur de 60° électriques situés symétriquement autour des maximums des tensions de phase d'entrée, le transistor de commande associé reste branché et l'évolution sinusoïdale du courant du réseau et la régulation de la tension de sortie s'obtiennent par cadençage des deux autres phases, ce qui réduit la puissance de perte de commutation par rapport à un cadençage simultané de toutes les phases et simplifie la commande du système.

4. Procédé de commande du dispositif selon les revendications 1 ou 2, **caractérisé en ce que** les commutateurs de commande (12) du pont (3) de courants tournants et le transistor (6) de relèvement de tension fonctionnent à la même fréquence d'horloge et la commutation de ces deux parties du convertisseur est synchronisée de telle sorte que les intervalles de passage du releveur de tension viennent se placer symétriquement par rapport à l'intervalle de marche à vide du pont (3) de courants tournants et **en ce que** pour recouvrir les deux états de commutation, aucune tension n'est appliquée sur l'inductance (4) et donc aucune modification de courant n'a lieu, ce qui permet de minimiser les variations à fréquence de commutation du courant de sortie du pont (3) de courants tournants.
